**Europäisches Patentamt**

(19) **European Patent Office**

**Office européen des brevets**

(11) Veröffentlichungsnummer: **0 045 392**
**B1**

(12) # EUROPÄISCHE PATENTSCHRIFT

(45) Veröffentlichungstag der Patentschrift:
**15.06.83**

(51) Int. Cl.³: **B 01 D 7/02**, F 28 F 9/00

(21) Anmeldenummer: **81105334.7**

(22) Anmeldetag: **09.07.81**

(54) **Desublimator für die Gewinnung von Sublimationsprodukten aus Reaktionsgasen.**

(30) Priorität: **06.08.80 DE 3029744**

(43) Veröffentlichungstag der Anmeldung:
**10.02.82 Patentblatt 82/6**

(45) Bekanntmachung des Hinweises auf die Patenterteilung:
**15.06.83 Patentblatt 83/24**

(84) Benannte Vertragsstaaten:
**AT BE DE GB IT**

(56) Entgegenhaltungen:
**DE-A-2 353 358**
**FR-A-2 045 895**
**FR-A-2 086 290**
**US-A-2 268 730**
**US-A-3 905 420**

(73) Patentinhaber: **BASF Aktiengesellschaft,
Carl-Bosch-Strasse 38, D-6700 Ludwigshafen (DE)**

(72) Erfinder: **Kassat, Harry, Gabelsberger Strasse 1,
D-4630 Bochum (DE)**
Erfinder: **Wirth, Friedrich, Dr., Schlossgasse 6,
D-6700 Ludwigshafen (DE)**
Erfinder: **Wagner, Joachim, Mundenheimer Strasse 158,
D-6700 Ludwigshafen (DE)**

## Desublimator für die Gewinnung von Sublimationsprodukten aus Reaktionsgasen

Die Erfindung betrifft einen Desublimator für die Gewinnung von Sublimationsprodukten aus Reaktionsgasen, welcher aus einem geschlossenen Gehäuse für die Aufnahme bzw. Hindurchleitung des Reaktionsgases und aus mehreren darin in horizontaler Lage übereinander eingebauten Reihen von Rippenrohren für die wechselweise innenseitige Beaufschlagung mit einem Heiz- oder Kühlmittel besteht und bei welchem das Reaktionsgas von oben nach unten im Kreuzstrom zum Heiz- oder Kühlmittelstrom geführt ist, wobei die jeweils übereinanderliegenden Rippenrohre jeder Reihe wechselseitig an dem einen Ende durch einen Umlenkbogen haarnadelförmig miteinander verbunden und am gegenüberliegenden Ende mit Anschlüssen für die Zu- bzw. Ableitung des Heiz- oder Kühlmittels versehen sind und bei welchem die übereinanderliegenden Rohre bzw. Rohrreihen mittels diese mindestens in den Endbereichen kastenförmig umschließender, käfigartig durchbrochener Gleitschuhe begrenzt verschiebbar abgestützt und zueinander distanziert sind, wobei die unmittelbar aufeinander gestapelten Gleitschuhe der einzelnen Rippenrohre sämtlicher Rohrreihen oder Gruppen von Rohrreihen auf jeweils gemeinsamen, am Gehäuse verankerten Abstützungsträgern lose aufliegen.

Bei einem bekannten Desublimator dieser Gattung (US-PS 3 905 420) weisen die Abstützungsträger einen rechteckigen bzw. quadratischen Querschnitt auf, wobei sie bevorzugt aus zwei miteinander verschweißten U-Trägern zu einem geschlossenen hohlen Kastenprofil zusammengesetzt sind.

Wird das z. B. Phthalsäureanhydrid enthaltende Reaktionsgas dabei von oben nach unten durch das Gehäuse des Desublimators hindurchgeführt, was im Gegensatz zu der sonst üblichen, entgegengesetzten Durchströmrichtung des Reaktionsgases in manchen Fällen Vorzüge hat, scheidet sich während der Kühlphase die überwiegende Menge des Sublimationsprodukts bevorzugt im Bereich der im Gehäuse oben liegenden Gruppen von Rippenrohren ab. In der Kühlphase, d. h. dem Beladen mit Sublimationsprodukt, folgenden Abschmelzphase tritt insofern ein gewisser Selbstreinigungseffekt ein, als das Sublimationsprodukt, von den oberen Rohrreihen ablaufend, die darunterliegenden Rohrreihen freispült. Auf diese Weise wird das in der Heizphase infolge Temperaturerhöhung eingeleitete Abschmelzen des Sublimationsprodukts beschleunigt und gleichzeitig erreicht, daß auch diejenigen Bereiche durch Freispülen gereinigt werden, die einer direkten Beheizung nicht zugänglich sind.

Dabei hat sich jedoch herausgestellt, daß in den Bereichen unterhalb der im Querschnitt kastenförmigen Abstützungsträger während der Heiz- bzw. Abschmelzphase »Spülschatten« auftreten, innerhalb welcher sich der vorerwähnte Selbstreinigungs- bzw. Wascheffekt nicht einstellen kann. Die innerhalb dieser Spülschatten verbleibenden Reste des Sublimationsprodukts sind nicht nur an sich lästig und unerwünscht, sie haben vor allem den Nachteil, daß sie sich über einen längeren Zeitraum in Säure umwandeln und auf diese Weise Korrosionen an den Rippenrohren verursachen, die zu beträchtlichen Zerstörungen, Undichtigkeiten und schließlich zu Bränden führen können.

Es bildet von daher Aufgabe der Erfindung, eine Abstützung für die Rippenrohre bzw. Rippenrohrgruppen zu schaffen, die die vorstehend beschriebenen Spülschatten vermeidet und auch dort, d. h. unterhalb der Unterstützungen, ein einwandfreies Ablaufen und Verteilen des Sublimationsprodukts während des Abschmelzens ermöglicht.

Zur Lösung dieser Aufgabe kennzeichnet sich die Erfindung dadurch, daß die Abstützungsträger im Querschnitt die Grundform eines mit der Spitze nach unten gerichteten Dreiecks aufweisen, bevorzugt die Querschnittsform eines auf die Spitze gestellten gleichschenkligen Dreiecks.

Versuche haben erwiesen, daß es allein mit Hilfe der erfindungsgemäß vorgeschlagenen Querschnittsform der Abstützungsträger möglich ist, sicherzustellen, daß das in der Abschmelzphase von oben ablaufende Sublimationsprodukt entlang der zueinander konvergierenden Dreiecksseiten zur nach unten gerichteten Spitze hin abgeleitet wird und sich, von dort abtropfend, über die darunterliegenden Rippenrohre verteilt.

Gemäß einer bevorzugten Weiterbildung der Erfindung ist die im wesentlichen horizontal ausgerichtete obere Längsfläche der Abstützungsträger im Querschnitt schwach nach außen gewölbt oder unter Bildung eines flachen längsverlaufenden Scheitels dachförmig gestaltet. Auf diese Weise wird das einwandfreie Ablaufen des abschmelzenden Sublimationsprodukts erleichtert und jegliche Bildung von Resten auf der Oberseite der Abstützungsträger vermieden.

Zweckmäßig ist zumindest die die Spitze des Dreiecks bildende untere Längskante der Abstützungsträger gerundet. Abgesehen davon, daß auf diese Weise nachteilige Riefen auf den Gleitschuhen infolge zu hoher spezifischer Flächenpresung vermieden werden, hat sich gezeigt, daß die Abrundung der unteren Längskante das Ablaufen bzw. Abtropfen des schmelzflüssigen Sublimationsprodukts begünstigt.

Die Abstützungsträger können in bekannter Weise aus einem Hohlprofil gebildet sein; sie sind jedoch bevorzugt aus einem stranggepreßten Vollprofil mit durchgehender Längsbohrung hergestellt.

In beiden Fällen können die Innenräume bzw. Längsbohrungen der Abstützungsträger in an sich bekannter Weise an ein geschlossenes Leitungssystem für die Hindurchleitung eines Heizmittels, insbesondere Heißöl, während der Abschmelzphase angeschlossen sein, um zu verhindern, daß das abschmelzende Sublimationsprodukt während des Passierens der Abstützungsträger eine Abkühlung erfährt und einen das einwandfreie Ablaufen beeinträchtigenden zu hohen Viskositätsgrad einnimmt.

Es hat sich außerdem als zweckmäßig erwiesen, auch oberhalb der obersten Rippenrohrbündel im Bereich der Gleitschuh-Stapel zusätzliche Abstützungsträger vorzusehen, die eine vertikale Verlagerung oder Verformung der Rippenrohrbündel verhindern und zugleich wesentlich zu einer Versteifung des Gehäuses beitragen.

Eine bevorzugte Ausführungsform der Erfindung ist nachstehend anhand der Zeichnung näher beschrieben. Es zeigt

Fig. 1 einen Desublimator im vertikalen Längsschnitt, teilweise in der Ansicht,

Fig. 2 den Desublimator der Fig. 1 in der Stirnansicht, teilweise im Schnitt,

Fig. 3 in perspektivischer Ansicht die Anbringung eines Gleitschuhs auf einem Rippenrohr und seine Abstützung auf einem Abstützungsträger und

Fig. 4 einen vertikalen Längsschnitt durch einen Abstützungsträger mit mehreren übereinandergestapelten Gleitschuhen.

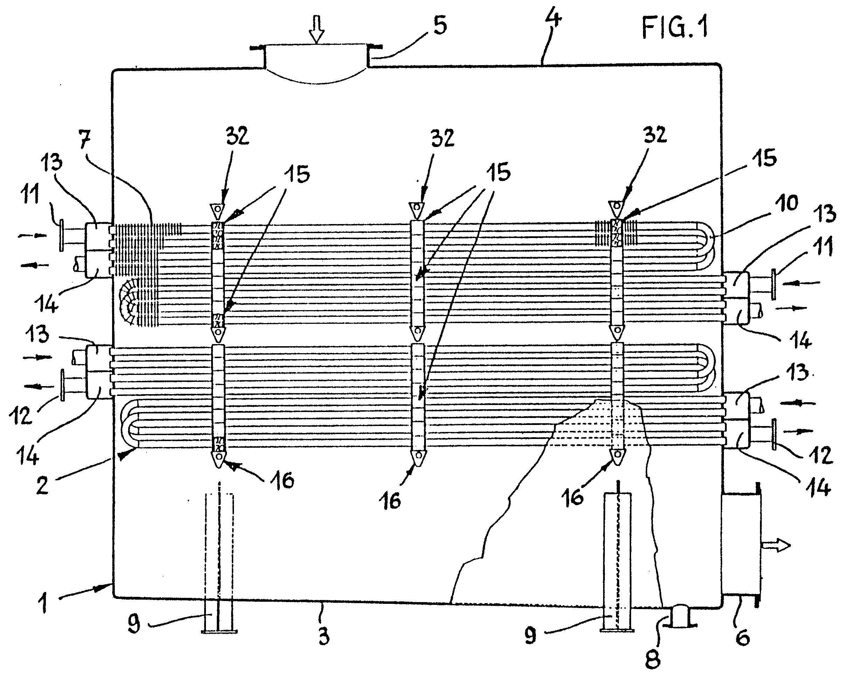

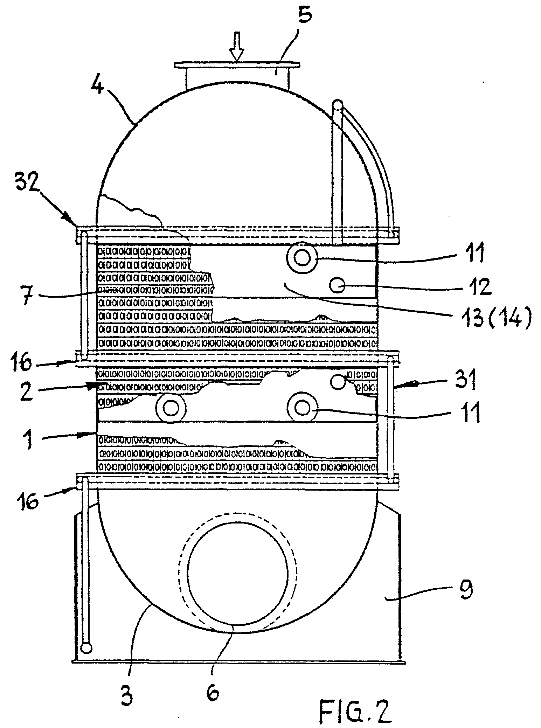

In den Fig.1 und 2 sind das im Längsschnitt etwa rechteckige, kastenförmige Gehäuse eines Desublimators mit 1 und der Rippenrohreinbau allgemein mit 2 bezeichnet.

Der Boden 3 und der Deckel 4 des Gehäuses 1 sind halbrund, d. h. schalenförmig, gestaltet. Mit 5 ist der Eintrittsstutzen für das Reaktionsgas im Deckel 4 und mit 6 der Ableitungsstutzen im Boden 3 bezeichnet. Das in der Beheizungs- bzw. Abschmelzphase von den Rippenrohren 7 abschmelzende Produkt wird über einen Ableitungsstutzen 8 des Gehäusebodens 3 abgezogen. Das Gehäuse 1 ist mittels Stützfüßen 9 auf einer geeigneten Aufstellfläche festlegbar.

Wie ferner aus Fig. 1 in Verbindung mit Fig. 2 hervorgeht, sind die Rippenrohre 7 in jeweils übereinanderliegenden Doppelreihen angeordnet, wobei die jeweils übereinanderliegenden Rippenrohre 7 jeder Reihe am einen Ende durch Umlenkbögen 10 miteinander haarnadelförmig verbunden und am gegenüberliegenden Ende mit den Anschlußmitteln für die Zu- bzw. Ableitung des Heiz- bzw. Kühlmittels versehen sind. Diese Anschlußmittel bestehen einerseits aus Anschlußflanschen 11 für die Zuleitung bzw. 12 für die Ableitung und andererseits aus Verteiler- bzw. Sammelkammern 13 bzw. 14, die jeweils die freien Enden jeder Rohrreihe miteinander verbinden.

Als Heiz- und Kühlmittel dient zweckmäßig Wasser oder Öl, wobei die mittlere Kühlmitteltemperatur in der Beladungsphase etwa 50° C und die mittlere Heizmitteltemperatur beim Abschmelzen des Produkts etwa 200° C beträgt.

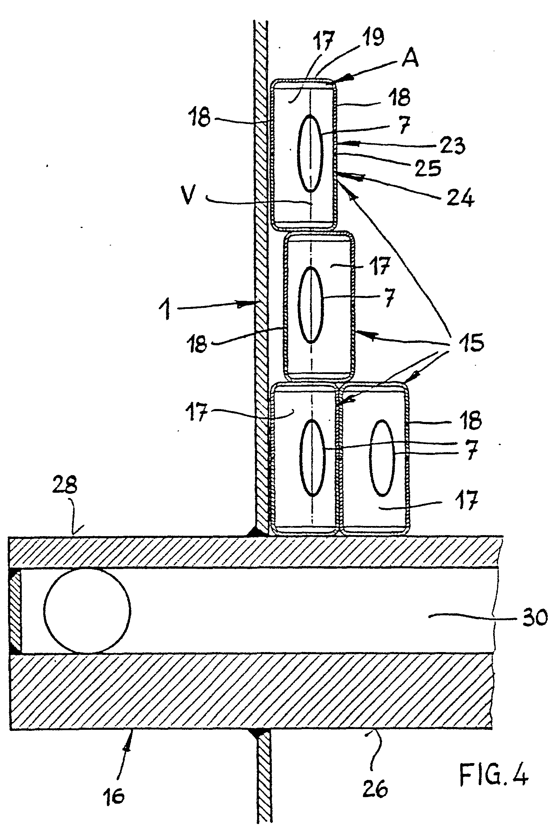

Schließlich ist aus Fig. 1 noch ersichtlich, daß jeweils in den Endbereichen sowie in der Längsmitte jedes Rippenrohres 7 das Rippenrohr 7 kastenförmig umschließende, käfigartige durchbrochene Gleitschuhe 15 aufgebracht sind. Mittels dieser Gleitschuhe 15 stützen sich die in der Höhe zueinander benachbarten Rippenrohre 7 lose aufeinander ab, wobei sie gemäß Fig. 4 gleichzeitig auch zur seitlichen Abstützung bzw. Führung der in jeder Rohrreihe nebeneinander angeordneten Rippenrohre 7 dienen. Die säulenartig unmittelbar aufeinandergestapelten Gleitschuhe 15 der einzelnen Rippenrohre 7 sämtlicher Rohrreihen stützen sich am unteren Ende ebenfalls lose auf jeweils gemeinsamen Abstützungsträgern 16 ab, die im unteren Endbereich des Gehäuses 1 an der Gehäusewand befestigt sind.

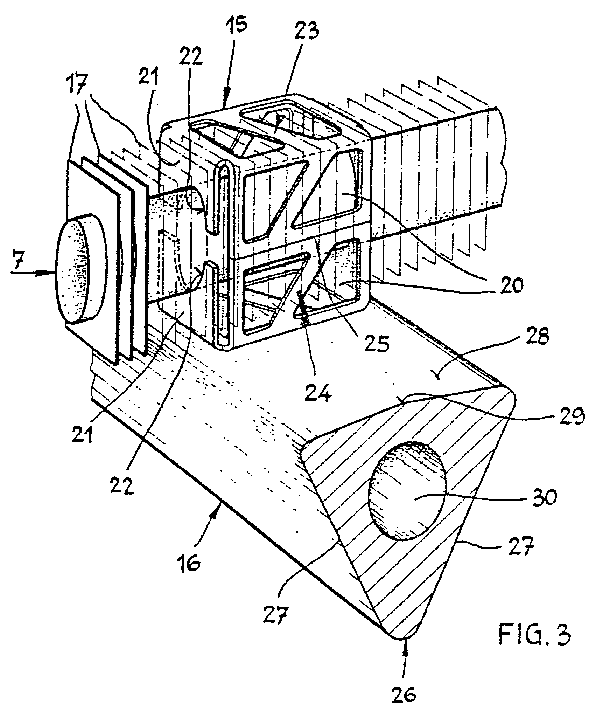

Wie aus den Fig. 3 und 4 erkennbar ist, weisen die Rohre 7 einen ovalen Querschnitt und recheckige Rippen 17 auf. Die Gleitschuhe 15 haben einen etwa der Rippengröße angepaßten rechteckigen Querschnitt, wobei ihre vertikalen Seitenwände 18 dicht an den seitlichen Rippenkanten anliegen, während zwischen ihren horizontalen Seitenwänden 19 und den Rippenkanten ein nur wenige Millimeter betragender freier Abstand A eingehalten ist. Wie insbesondere aus Fig. 3 hervorgeht, sind sämtliche Seitenwandungen 18, 19 des kastenförmigen Gleitschuhs 15 mit verhältnismäßig großen Durchbrechungen 20 versehen, die die Form von angenäherten Dreiecken haben bzw. trapezförmig gestaltet sind. Die Gesamtgröße dieser Durchbrechungen 20 entspricht etwa 50% der Wandflächen.

Die Stirnwände 21 der kastenförmigen Gleitschuhe 15 weisen der Querschnitts- bzw. Umrißform der Kernrohre 7 entsprechende Randausnehmungen 22 auf (Fig. 3), mittels welcher die Gleitschuhe 15 auf den Kernrohren 7 abgestützt sind. Sie dienen zugleich als Abstandshalter und Stützstege für die Übertragung der Lasten des gesamten Rippenrohrsystems auf die unteren Abstützungsträger 16 und sind entsprechend dimensioniert.

Die jedem Rippenrohr 7 gesondert zugeordneten Gleitschuhe 15 stützen sich mit ihren horizontalen Seitenwänden 19 unmittelbar flächig, aber lose aufeinander ab, so daß sich die Rohre 7 bzw. Gleitschuhe 15 im Zuge von Wärmedehnungen relativ zueinander bewegen können, ohne daß die einwandfreie Abstützung des Rippenrohrpakets auf den unteren Abstützungsträgern 16 dadurch beeinträchtigt wird.

Die Fig. 4 zeigt in diesem Zusammenhang, daß die übereinanderliegenden Gleitschuhe 15 zwar in horizontaler Ebene seitlich versetzt sind, so daß eine geringfügige Überlappung stattfindet, daß aber die Rippenrohre 7 exakt in derselben Vertikalebene V übereinander angeordnet sind.

Wie besonders deutlich aus Fig. 3 hervorgeht, sind die Gleitschuhe 15 aus zwei symmetrischen, kastenförmigen Längshälften 23, 24 zusammengesetzt, die U-förmigen Querschnitt aufweisen und unter Einschluß der Rippenrohre 7 längs der bündig gegeneinanderstoßenden Schenkelkanten bei 25 fest miteinander verschweißt sind, so daß sie zusammen mit den Rippenrohren 7 eine geschlossene Einheit bilden.

Die Herstellung der beiden Kastenhälften 23, 24 der Gleitschuhe 15 erfolgt z. B. durch Ausstanzen einer etwa 3 mm starken Blechplatine. Beim Ausstanzen der Form werden gleichzeitig auch die Durchbrechungen 20 ausgestanzt. Anschließend wird das fertig gestanzte Blech an den späteren Längs- und Querkanten unter einem Winkel von jeweils 90° abgekantet, so daß die gezeichnete Kastenform entsteht.

Beim Ausführungsbeispiel finden Abstützungsträger 16 Anwendung, die im Querschnitt die Grundform eines mit der Spitze 26 nach unten gerichteten Dreiecks aufweisen (siehe Fig. 1, 3 und 4). Es handelt sich hierbei um ein Dreieck mit gleich langen Schenkeln 27 (Fig. 3). Die im wesentlichen horizontal ausgerichtete obere Längsfläche 28 ist im Querschnitt schwach nach oben gewölbt oder unter Bildung eines flachen, längsverlaufenden Scheitels 29 dachförmig gestaltet. Die Spitze 26 ist gerundet.

Ferner lassen die Fig. 3 und 4 erkennen, daß die Abstützungsträger 16 aus einem Hohlprofil bestehen. Hierbei kann es sich um ein stranggepreßtes Profil mit durchgehender Längsbohrung 30 handeln.

Die Längsbohrung 30 der Abstützungsträger 16 sind in der aus der Fig. 2 erkennbaren Weise an ein geschlossenes Leitungssystem 31 für die Hindurchleitung eines Heizmittels während der Abschmelzphase angeschlossen.

Schließlich zeigt die Fig. 1, daß das im Gehäuse oben liegende Rippenrohrbündel auch oberseitig im Bereich der Gleitschuh-Stapel durch zusätzliche Abstützungsträger 32 gegen eine vertikale Verlagerung oder Verformung gesichert ist. Auch diese Abstützungsträger 32 sind in der aus der Fig. 2 erkennbaren Weise an das Leitungssystem 31 angeschlossen.

**Patentansprüche**

1. Desublimator für die Gewinnung von Sublimationsprodukten aus Reaktionsgasen, welcher aus einem geschlossenen Gehäuse (1) für die Aufnahme bzw. Hindurchleitung des Reaktionsgases und aus mehreren darin in horizontaler Lage übereinander eingebauten Reihen von Rippenrohren (7) für die wechselweise innenseitige Beaufschlagung mit einem Heiz- oder Kühlmittel besteht und bei welchem das Reaktionsgas von oben nach unten im Kreuzstrom zum Heiz- oder Kühlmittelstrom geführt ist, wobei die jeweils übereinanderliegenden Rippenrohre jeder Reihe wechselseitig an dem einen Ende durch einen Umlenkbogen (10) haarnadelförmig miteinander verbunden und am gegenüberliegenden Ende mit Anschlüssen (11, 12, 13, 14) für die Zu- bzw. Ableitung des Heiz- oder Kühlmittels versehen sind und bei welchem die übereinanderliegenden Rohre bzw. Rohrreihen mittels diese mindestens in den Endbereichen kastenförmig umschließender, käfigartig durchbrochener Gleitschuhe (15) begrenzt verschiebbar abgestützt und zueinander distanziert sind, wobei die unmittelbar aufeinander gestapelten Gleitschuhe der einzelnen Rippenrohre sämtlicher Rohrreihen oder Gruppen von Rohrreihen auf jeweils gemeinsamen, am Gehäuse verankerten Abstützungsträgern (16) lose aufliegen, dadurch gekennzeichnet, daß die Abstützungsträger (16) im Querschnitt die Grundform eines mit der Spitze (26) nach unten gerichteten Dreiecks aufweisen.

2. Desublimator nach Anspruch 1, dadurch gekennzeichnet, daß die Querschnittsform der Abstützungsträger (16) die eines gleichschenkligen Dreiecks ist.

3. Desublimator nach Anspruch 1 oder 2, dadurch gekennzeichnet, daß die im wesentlichen horizontal ausgerichtete obere Längsfläche (28) der Abstützungsträger (16) im Querschnitt schwach nach außen gewölbt oder unter Bildung eines flachen, längsverlaufenden Scheitels (29) dachförmig gestaltet ist.

4. Desublimator nach Anspruch 1, 2 oder 3, dadurch gekennzeichnet, daß mindestens die die Spitze (26) des Dreiecks bildende, untere Längskante der Abstützungsträger (16) gerundet ist.

5. Desublimator nach Anspruch 1 oder einem der folgenden, dadurch gekennzeichnet, daß die Abstützungsträger (16) aus einem Hohlprofil bestehen.

6. Desublimator nach Anspruch 1 oder einem der Ansprüche 2 bis 4, dadurch gekennzeichnet, daß die Abstützungsträger (16) aus einem stranggepreßten Vollprofil mit durchgehender Längsbohrung (30) bestehen.

7. Desublimator nach Anspruch 5 oder 6, dadurch gekennzeichnet, daß die Innenräume bzw. Längsbohrungen (30) der Abstützungsträger (16) an ein geschlossenes Leitungssystem (31) für die Hindurchleitung eines Heizmittels während der Abschmelzphase angeschlossen sind.

8. Desublimator nach Anspruch 1 oder einem der folgenden, dadurch gekennzeichnet, daß das im Gehäuse (1) obenliegende Rippenrohrbündel auch oberseitig im Bereich der Gleitschuh-Stapel durch Abstützungsträger (32) gegen eine vertikale Verlagerung oder Verformung gesichert ist.

**Claims**

1. A desublimator for isolating sublimation products from reaction gases, which consists of a closed housing (1) for the reception or passage of the reaction gas and of a plurality of rows of finned tubes (7) accommodated horizontally and superposedly therein, for alternate internal exposure to a heating medium or cooling medium, in which desublimator the reaction gas is passed downward crosswise to the flow of heating medium or cooling medium, the successive superposed finned tubes of each row being alternately connected together at one end, by a hairpin-shaped bend (10), and being provided, at the opposite end, with connections (11, 12, 13, 14) for introducing and discharging the heating medium or cooling medium, and the superposed tubes or rows of tubes being supported, and mutually spaced, with limited adjustability, by means of cage-like perforated sliding shoes (15) surrounding them in a box-like manner at least in the end zones, the sliding shoes of the individual finned tubes of all rows of tubes or groups of tubes being directly stacked one above the other and resting loosely on common supporting girders (16) anchored to the housing, wherein the supporting girders (16) have, in cross-section, the basic shape of a triangle with its apex (26) pointing downward.

2. A desublimator as claimed in claim 1, wherein the cross-sectional shape of the supporting girders (16) is that of an isosceles triangle.

3. A desublimator as claimed in claim 1 or 2, wherein the essentially horizontal upper lengthwise surface (28) of the supporting girders (16) is, in cross-section, slightly convex or roof-shaped, a flat lengthwise ridge (29) being formed.

4. A desublimator as claimed in claim 1, 2 or 3, wherein at least the lower lengthwise edge, forming the apex (26) of the triangle, of the supporting girders (16) is rounded.

5. A desublimator as claimed in claim 1 or any of the claims following it, wherein the supporting girders (16) each consist of a hollow profile.

6. A desublimator as claimed in claim 1 or any of claims 2 to 4, wherein the supporting girders (16) each consist of an extruded solid profile having a continuous lengthwise bore (30).

7. A desublimator as claimed in claim 5 or 6, wherein the internal spaces or lengthwise bores (30) of the supporting girders (16) are connected in a conventional manner to a closed pipeline system (31) for the passage of a heating medium during the melting-off phase.

8. A desublimator as claimed in claim 1 or any of the claims following it, wherein the uppermost finned tube bundle in the housing (1) is additionally secured against vertical shift or distortion by means of supporting girders (32) bearing on its top face in the region of the sliding shoe stack.

**Revendications**

1. Installation de désublimation pour l'extraction de produits de sublimation de gaz réactionnels, constituée d'un boîtier fermé (1) pour la réception et(ou) le passage du gaz réactionnel et de plusieurs rangées superposées de tuyaux à ailettes (7) horizontaux, à l'intérieur desquels peut circuler alternativement un milieu chauffant et un milieu réfrigérant, le gaz réactionnel circulant de haut en bas en un courant croisé par rapport au courant de milieu chauffant ou réfrigérant, les tuyaux à ailettes successifs de chaque rangée étant alternativement reliés l'un à l'autre à l'une de leurs extrémités par un coude (10) en forme d'épingle à cheveux et munis à l'extrémité opposée de raccords (11, 12, 13, 14) pour l'admission et(ou) l'évacuation du milieu chauffant ou réfrigérant, les tuyaux et(ou) rangées de tuyaux superposés étant supportés par des coulisseaux (15) ajourés comme une cage, entourant au moins les régions marginales de ceux-ci à la façon d'un caisson, qui servent d'organes d'écartement et permettent un déplacement limité de ceux-ci, les coulisseaux superposés pour toutes les rangées de tuyaux à ailettes ou pour des groupes de rangées de tuyaux à ailettes reposant librement sur des longerons d'appui (16) communs, ancrés au boîtier, caractérisée en ce que la section des longerons d'appui (16) a la forme fondamentale d'un triangle, dont la pointe (26) est dirigée vers le bas.

2. Installation de désublimation suivant la revendication 1, caractérisée en ce que la section des longerons d'appui (16) a la forme d'un triangle isocèle.

3. Installation de désublimation suivant l'une des revendications 1 et 2, caractérisée en ce que la surface longitudinale supérieure (28) des longerons d'appui (16), sensiblement horizontale, est légèrement convexe ou a la forme d'un toit avec une crête (29) longitudinale aplatie.

4. Installation de désublimation suivant l'une des revendications 1, 2 et 3, caractérisée en ce qu'au moins l'arête longitudinale inférieure des longerons d'appui (16), constituant la pointe (26) du triangle, est arrondie.

5. Installation de désublimation suivant la revendication 1 ou l'une des autres revendications, caractérisée en ce que les longerons d'appui (16) sont constitués par un profilé creux.

6. Installation de désublimation suivant la revendication 1 ou l'une des revendications 2 à 4, caractérisée en ce que les longerons d'appui (16) sont constitués d'un profilé extrudé plein avec une forure longitudinale (30) continue.

7. Installation de désublimation suivant l'une des revendications 5 et 6, caractérisée en ce que l'intérieur ou la forure longitudinale (30) des longerons d'appui (16) est connecté à un réseau fermé (31) de tuyaux pour le passage d'un milieu chauffant pendant la phase de sublimation.

8. Installation de désublimation suivant la revendication 1 ou l'une des revendications suivantes, caractérisée en ce que le faisceau de tuyaux à ailettes, disposé au sommet dans le boîtier (1), est également bloqué du côté supérieur, dans la région des coulisseaux empilés, par des longerons de butée (32) en vue d'empêcher toute déformation et tout déplacement vertical.

FIG.1

0 045 392

FIG.2

FIG. 3

FIG.4